Europäisches Patentamt

European Patent Office

Office européen des brevets

(11) Veröffentlichungsnummer : **0 183 958**
**B1**

# (12) EUROPÄISCHE PATENTSCHRIFT

(45) Veröffentlichungstag der Patentschrift :
04.05.88

(21) Anmeldenummer : 85113415.5

(22) Anmeldetag : 22.10.85

(51) Int. Cl.⁴ : **A 61 C   1/18, F 16 L 37/22**

(54) Kugelrastvorrichtung zum axialen Verbinden und Lösen von zwei im gekuppelten Zustand gegeneinander verdrehbaren Teilen eines zahnärztlichen Gerätes.

(30) Priorität : 05.11.84 DE 3440341

(43) Veröffentlichungstag der Anmeldung :
11.06.86 Patentblatt 86/24

(45) Bekanntmachung des Hinweises auf die Patenterteilung : 04.05.88 Patentblatt 88/18

(84) Benannte Vertragsstaaten :
AT CH DE FR IT LI

(56) Entgegenhaltungen :
DE-C-   583 718
US-A- 3 144 237
US-A- 4 431 412

(73) Patentinhaber : **Siemens Aktiengesellschaft Berlin
und München
Wittelsbacherplatz 2
D-8000 München 2 (DE)**

(72) Erfinder : **Landgraf, Hermann
Donaustrasse 1
D-6148 Heppenheim (DE)**
Erfinder : **Schuss, Werner
In der Lahrbach 18
D-6148 Heppenheim (DE)**
Erfinder : **Schwarz, Werner
Birkenweg 5
D-6148 Heppenheim (DE)**

## Beschreibung

Die Erfindung bezieht sich auf eine Kugelrastvorrichtung zum schnellen axialen Verbinden und Lösen von zwei im gekuppelten Zustand gegeneinander verdrehbaren Teilen eines zahnärztlichen Gerätes, mit wenigstens zwei gleichmäßig am Umfang und in einer Querebene liegend, in Bohrungen eines zylindrischen Abschnittes des einen zu kuppelnden Teiles eingelegten Kugeln, die im gekuppelten Zustand mittels eines im einen Teil gehalterten, geschlossenen Ringes in einer Ringnut des anderen Teils einrasten.

Aus der DE-C-583 718 ist eine Kupplungsvorrichtung für durch biegsame Wellen angetriebene zahnärztliche Werkzeuge bekannt, die eine Kugelrasteinrichtung enthält, bei der eine Rastkugel, die mittels eines federnden offenen Ringes in eine Rastnut einrastet, vorgesehen ist. Der federnde Ring hat mehrere Rastbohrungen am Umfang, die dazu dienen, den auf die Kugel wirkenden Druck einstellen zu können. Mit dieser Kugelrasteinrichtung soll ein selbsttätiges Entkuppeln bei Überlastung der beiden miteinander gekuppelten biegsamen Wellen erzielt werden. Die Rasteinrichtung dient also nicht dazu, einerseits ein schnelles axiales An- und Abkuppeln der Teile und andererseits im gekuppelten Zustand die freie Drehbarkeit der Teile zu gewährleisten.

Aus US-A-44 31 412 ist eine Kugelrastvorrichtung der obengenannten Gattung bekannt, bei der am einen Handstückteil am Umfang drei federbelastete Kugeln vorgesehen sind, die in eine am Umfang des anderen Handstückteils angeordnete Ringnut eingreifen. Die Kugeln und die Federn werden von einem geschlossenen, nicht federnden Ring gehalten.

Nachteilig bei solchen Kugelrastvorrichtungen ist es, daß die Kugeln während des Rast- und Entrastvorganges so stark gegen die mit ihnen korrespondierenden Rastflächen gedrückt werden, daß sie, in ihrer Drehung blockiert, über die Rastflächen gezogen werden. Es hat sich gezeigt, daß wegen der Blockierung der Kugeln diese oder die mit ihren korrespondierenden Rastflächen bei häufigen Rastvorgängen stark abgenutzt werden.

Aufgabe der vorliegenden Erfindung ist es, eine demgegenüber verbesserte, den Verschleiß von Kugeln und Rastflächen auf ein Minimum reduzierende Kugelrastvorrichtung anzugeben.

Zur Lösung dieser Aufgabe wird bei einer Kugelrastvorrichtung der eingangs genannten Gattung erfindungsgemäß vorgeschlagen, daß der Ring federnd ausgebildet, frei drehbar und mit axialem Spiel gehalten ist. Damit ist sichergestellt, daß die Kugeln auch bei stärkster Krafteinwirkung sowohl bei Verdrehung der beiden Teile als auch beim Rast- und Entrastvorgang, also bei axialer Bewegung, ohne zu blockieren abrollen können. Der Verschleiß ist dadurch auf ein Minimum reduziert. Legt man die Rasttiefe der Kugeln in der Ringnut so fest, daß die Kugeln nur an seitlichen Flächen der Ringnut abrollen, der Nutgrund also nicht berührt wird, so läßt sich das axiale Spiel zwischen den zu rastenden Teilen im gekuppelten Zustand ebenfalls auf ein Minimum reduzieren.

Weitere vorteilhafte Ausgestaltungen sind den Unteransprüchen und der nachfolgenden Beschreibung eines Ausführungsbeispiels der Erfindung anhand der Zeichnung zu entnehmen. Es zeigen :

Figur 1 ein zahnärztliches Turbinenhandstück in schaubildlicher Darstellung,

Figur 2 ein Anschlußteil, an das das Turbinenhandstück nach Figur 1 ankuppelbar ist,

Figur 3 Einzelteile vom Handstück nach Figur 1 in einer Explosionsdarstellung,

Figur 4 einen Längsschnitt im Bereich der Kupplungsstelle von den beiden Handstückteilen nach Figur 1 und 2 im gekuppelten Zustand.

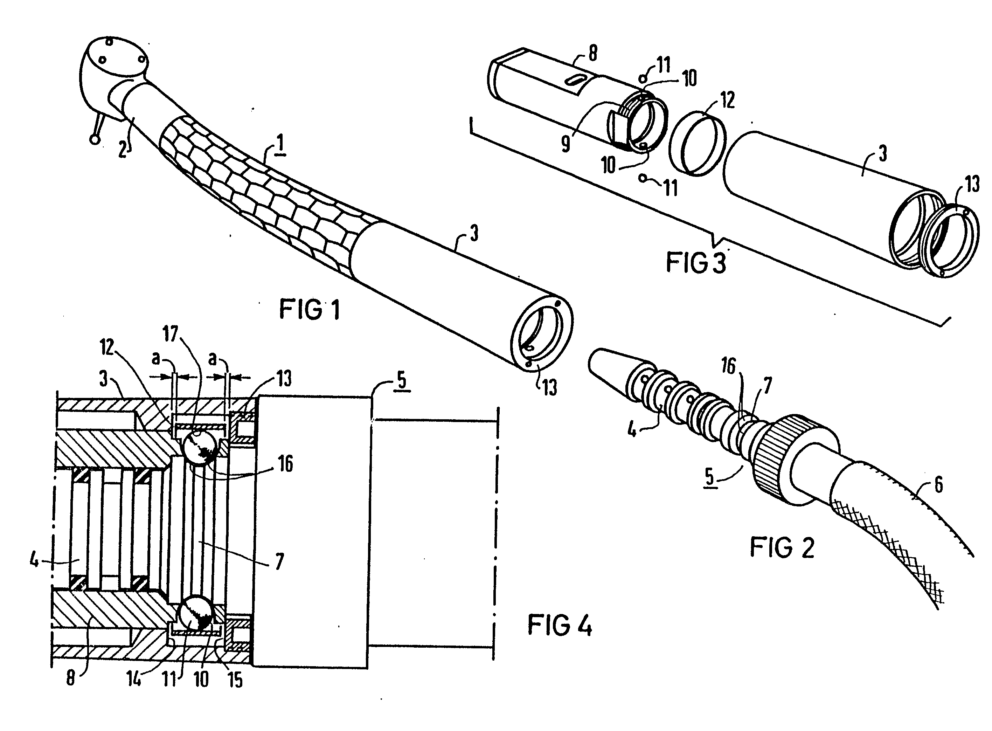

Die Figur 1 zeigt in perspektivischer Darstellung ein zahnärztliches Turbinenhandstück 1, welches in bekannter Weise an seinem einen Ende ein Kopfteil 2 zur Aufnahme eines nicht dargestellten rotierenden Werkzeuges aufweist und an seinem anderen Ende hülsenförmig ausgebildet ist. In das hülsenförmige Endteil 3 des Handstückes 1 kann der Steckzapfen 4 einer in Figur 2 dargestellten Anschlußarmatur 5, an die ein Versorgungsschlauch 6 angeschlossen ist, axial eingeführt und im eingeführten Zustand frei drehbar gerastet werden. Hierzu ist eine Kugelrastvorrichtung vorgesehen, die anhand der Figuren 3 und 4 näher erläutert wird. Auf die konstruktive Gestaltung des Kupplungszapfens 4, betreffend die Medienführung vom Versorgungsschlauch 6 zum Handstück 1, braucht hier, da Stand der Technik, nicht näher eingegangen zu werden. Von Bedeutung ist lediglich eine im rückwärtigen Teil des Steckzapfens 4 angeordnete Ringnut 7, die Teil der noch näher zu erläuternden Kugelrastvorrichtung ist.

Das hülsenförmige Endteil 3 des Handstückes 1 enthält ein ebenfalls hülsenförmiges, oben abgeflachtes Einsatzteil 8, welches an dem der Anschlußarmatur 5 zugewandten Ende mit einem Einstich 9 und zwei, am Umfang gleichmäßig angeordneten, in einer Querebene liegenden Paßbohrungen 10 versehen ist, in die Kugeln 11 mit geringem Spiel so eingelegt werden, daß sie aus den Paßbohrungen wenig nach innen vorstehen, gegen Hindurchfallen jedoch gesichert sind. Mit 12 ist ein als Rastfeder dienender geschlossener Ring bezeichnet, der, wie anhand der Figur 4 noch näher erläutert, mit einem bestimmten axialen Spiel in bezug auf benachbarte Anschlagflächen federnd auf den Kugeln 11 aufliegt. Den stirnseitigen Abschluß des Handstückes 1 bildet ein Schraubring 13.

Die Figur 4 zeigt anhand einer Längsschnittdarstellung im Bereich der Kupplungsstelle die beiden Handstückteile 1 und 5 im gekuppelten Zustand. Der federnde Ring 12, der die für eine Rastung notwendige Anpreßkraft auf die Kugeln 11 ausübt, ist zylinderförmig ausgebildet und mit beiderseitigem axialem Spiel a im Endteil 3 des Handstückes gehalten. Der eine Anschlag wird durch einen Bund 14 des Einsatzteils 8, der andere Anschlag durch eine stirnseitige Fläche 15 des Schraubringes 13 gebildet.

Die Bohrungen 10 sind so bemessen, daß die Kugeln 11 so weit nach innen vorstehen, daß eine ausreichende Rastung mit der Ringnut 7 im Zapfen 4 gewährleistet ist. Vorteilhafterweise weist die Ringnut 7 im Zapfen 4 des Anschlußteiles 5 schräge Abrollflächen 16 auf, die so ausgeführt sind, daß die Kugeln 11 im gekuppelten Zustand in spielfreier Dreipunktauflage, gebildet durch die beiden Abrollflächen 16 und die Auflagefläche 17 der Kugel 11 am Ring 12, an diesen Flächen abrollen können. Der Nutgrund der Ringnut 7 wird dabei von den Kugeln nicht berührt, wodurch die Reibung auf ein Minimum begrenzt ist.

Beim Rasten und Entrasten der Teile 1 und 5 werden zunächst die beiden Kugeln 11 in ihren Paßbohrungen 10 radial nach außen gedrückt, wodurch der federnde Ring 12 oval verformt wird. Die Kugeln werden dabei einerseits durch Abrollen an den Nutflächen 16 mit der Ringnut 7 außer Eingriff gebracht und andererseits in ihren Paßbohrungen 10 radial nach außen bewegt. Dadurch, daß der Ring einerseits frei drehbar und andererseits mit beidseitigem axialem Spiel (a) auf den Kugeln aufliegt, können die Kugeln, ohne daß sie in ihrer Bewegung blockiert werden, sowohl in axialer Richtung als auch am Umfang des Ringes abrollen. Der Ring kann dabei — je nachdem, ob ein- oder ausgerastet wird — innerhalb des Spiels nach links oder rechts bis zum Anschlag (14 oder 15) ausweichen. Die auf die Kugeln übertragene Axialbewegung beim Rast- und Entrastvorgang führt somit zu einer Abrollbewegung der Kugeln, vermeidet also ein Blockieren der Kugeln, wodurch der Verschleiß der Teile vermindert und deren Lebensdauer erhöht wird.

Die beschriebene Kugelrastvorrichtung ist vorteilhafterweise zur schnellen Rastung eines Turbinenhandstückes mit der Anschlußarmatur eines Versorgungsschlauches vorgesehen ; sie ist jedoch nicht auf diese Anwendung beschränkt. Sie läßt sich vielmehr zum An- und Abkuppeln beliebiger anderer Handstücke oder anderer Teile eines zahnärztlichen Gerätes, die im gekuppelten Zustand gegeneinander verdrehbar sind, anwenden.

## Patentansprüche

1. Kugelrastvorrichtung zum axialen Verbinden und Lösen von zwei im gekuppelten Zustand gegeneinander verdrehbaren Teilen (1, 5) eines zahnärztlichen Gerätes, mit wenigstens zwei gleichmäßig am Umfang und in einer Querebene liegend, in Bohrungen (10) eines Abschnittes (8) des einen Teiles (1) eingelegten Kugeln (11), die im gekuppelten Zustand mittels eines im einen Teil (1) gehaltenen, geschlossenen Ringes (12) in einer Ringnut (7) des anderen Teiles (5) einrasten, dadurch gekennzeichnet, daß der Ring (12) federnd ausgebildet, frei drehbar und mit axialem Spiel (a) gehaltert ist.

2. Kugelrastvorrichtung nach Anspruch 1, dadurch gekennzeichnet, daß ein zylinderförmiger Ring (12) verwendet ist.

3. Kugelrastvorrichtung nach Anspruch 1 oder 2, dadurch gekennzeichnet, daß das axiale Spiel (a) durch einerseits einen Anschlag (14) eines die Bohrungen (10) aufnehmenden Einsatzteils (8) und andererseits durch einen Schraubring (13) begrenzt ist, welcher das Einsatzteil (8) in einer Außenhülse (3) des einen Teiles (1) axial fixiert.

4. Kugelrastvorrichtung nach einem der Ansprüche 1 bis 3, dadurch gekennzeichnet, daß die Rasttiefe der Kugeln (11) in der Ringnut (7) so festgelegt ist, daß die Kugeln nur an seitlichen Flächen (16) der Ringnut (7) abrollen.

5. Kugelrastvorrichtung nach einem der Ansprüche 1 bis 4, dadurch gekennzeichnet, daß eine im Querschnitt mit V-förmigen Flächen (16) versehene Ringnut (7) vorgesehen ist.

6. Kugelrastvorrichtung nach einem der Ansprüche 1 bis 5, dadurch gekennzeichnet, daß sie bei einem zahnärztlichen Turbinenhandstück (1) und einem mit diesem zu kuppelnden, mit einem Versorgungsschlauch (6) verbundenen Anschlußteil (5) vorgesehen ist.

7. Kugelrastvorrichtung nach Anspruch 6, dadurch gekennzeichnet, daß der Ring (12) in einem in der Griffhülse (3) des Turbinenhandstückes (1) angeordneten hülsenförmigen Einsatzteil (8) gehalten ist, in dessen Öffnung ein Steckzapfen (4) des mit dem Versorgungsschlauch (6) verbundenen Anschlußteiles (5) eingeführt und gerastet werden kann.

## Claims

1. Ball lock device for the axial connection and release of two parts (1, 5) of a dental device which are rotatable with respect to each other in the coupled state, having at least two balls (11) lying uniformly on the circumference and in a transverse plane, inserted into bores (10) of a section (8) of one of the parts (1), which balls lock into an annular groove (7) of the other part (5) in the coupled state by means of a closed ring (12) mounted in the one part (1), characterised in that the ring (12), of resilient construction, is mounted so as to be freely rotatable and with axial clearance (a).

2. Ball lock device according to claim 1, characterised in that a cylindrical ring (12) is used.

3. Ball lock device according to claim 1 or 2, characterised in that the axial clearance (a) is limited on one side by a stop (14) of an insert part (8) receiving the bores (10) and on the other side by a screw ring (13) which fixes the insert part (8) axially in an outer sleeve (3) of the one part (1).

4. Ball lock device according to one of claims 1 to 3, characterised in that the locking depth of the balls (11) in the annular groove (7) is determined so that the balls roll off only on lateral surfaces (16) of the annular groove (7).

5. Ball lock device according to one of claims 1 to 4, characterised in that there is provided an annular groove (7) provided in cross section with V-shaped surfaces (16).

6. Ball lock device according to one of claims 1 to 5, charaterised in that it is provided in a dental turbine handpiece (1) and a connecting part (5) to be coupled to it and connected to a supply tube (6).

7. Ball lock device according to claim 6, characterised in that the ring (12) is mounted in a sleeve-shaped insert part (8) arranged in the grip sleeve (3) of the turbine handpiece (1), and in the aperture of this insert part a plug-in journal (4) of the connecting part (5) joined to the supply tube (6) can be introduced and locked.

**Revendications**

1. Dispositif d'encliquetage à billes permettant de relier et de séparer axialement deux parties (1, 5) d'un appareil de dentisterie, qui tournent l'une par rapport à l'autre à l'état accouplé, et comportant au moins deux billes (11), qui sont insérées, en étant réparties uniformément sur la périphérie et situées dans un plan transversal, dans des perçages (10) d'une section (8) d'une première partie (1) et qui, à l'état accouplé, s'encliquettent dans une gorge annulaire (7) de l'autre partie (5), sous l'action d'une bague fermée (12) retenue dans la partie (1), caractérisé par le fait que la bague (12) est agencée de manière à être élastique, à pouvoir tourner librement et à être retenue avec un certain jeu axial (a).

2. Dispositif d'encliquetage à billes suivant la revendication 1, caractérisé par le fait qu'on utilise une bague (12) de forme cylindrique.

3. Dispositif d'encliquetage à billes suivant la revendication 1 ou 2, caractérisé par le fait que le jeu axial (a) est limité d'une part par une butée (14) d'un insert (8), dans lequel les perçages (10) sont ménagés, et d'autre part par un anneau fileté (13), qui bloque axialement l'insert (8) dans un manchon extérieur (3) de la première partie (1).

4. Dispositif d'encliquetage à billes suivant l'une des revendications 1 à 3, caractérisé par le fait que la profondeur d'encliquetage des billes (11) dans la gorge annulaire (7) est déterminée de manière que les billes roulent uniquement sur des surfaces latérales (16) de la gorge annulaire (7).

5. Dispositif d'encliquetage à billes suivant l'une des revendications 1 à 4, caractérisé par le fait qu'il est prévu une gorge annulaire (7) possédant, en coupe transversale, des surfaces (16) en forme de V.

6. Dispositif d'encliquetage à billes suivant l'une des revendications 1 à 5, caractérisé par le fait qu'il est prévu dans le cas d'une pièce à main de dentisterie en forme de turbine (1) et d'un organe de raccordement (5) devant être accouplé à cette pièce à main et relié à un tuyau d'alimentation (6).

7. Dispositif d'encliquetage à billes suivant la revendication 6, caractérisé par le fait que la bague (12) est maintenue dans un insert en forme de douille (8), qui est disposé dans le manchon de préhension (3) de la pièce à main formant turbine (1), et dans l'ouverture de laquelle un embout enfichable (4) de l'organe de raccordement (5) relié au tuyau d'alimentation (6) peut être inséré et encliqueté.

FIG 1

FIG 2

FIG 3

FIG 4